# EUROPEAN PATENT APPLICATION

(11) **EP 1 732 361 A2**
(43) Date of publication of application: **13.12.2006**
(21) Application number: 06114766.6
(22) Date of filing: 31.05.2006
(51) Int. Cl.: H05B 33/08, G09G 3/32

(54) **Light-emitting device using organic electroluminescent element**

(30) Priority: 06.06.2005 JP 2005166077
(71) Applicant: KABUSHIKI KAISHA TOYOTA JIDOSHOKKI, Kariya-shi, Aichi 448-8671 (JP)
(72) Inventor: Inoue, Toshiki, Kariya-shi Aichi 448-8671 (JP)
(74) Representative: TBK-Patent

(57) **Abstract**

A light-emitting device that uses an organic electroluminescent element, wherein the application of reverse voltage is achieved with a simple structure, is disclosed. The light-emitting device may include a power source, an organic electroluminescent element, and a capacitor. When the light-emitting device is on, the power source may be used to apply forward voltage to the organic electroluminescent element and charge the capacitor. When the light-emitting device is off, the capacitor may be used to apply reverse voltage to the organic electroluminescent element, without using the power source.

## Description

### Background of the Invention

### Field of the Invention

The present invention relates to a light-emitting device that uses an organic electroluminescent element (hereinafter referred to as an "organic EL element"). More specifically, the present invention relates to a light-emitting device that applies reverse voltage to the organic EL element when the organic EL element is not emitting light.

### Description of the Related Art

The organic EL element is a light-emitting element that includes an organic emission layer, an anode and a cathode. The organic emission layer is disposed between the anode and the cathode. Light emitted from the organic EL element is generated by applying voltage that exceeds an emission threshold voltage such that the anode attains a higher potential than the cathode (i.e., applying forward voltage). Once such voltage is applied, electron holes are introduced from the anode to the organic emission layer, and electrons are introduced from the cathode to the organic emission layer. This excites illuminants in the organic emission layer, whereby the organic EL element emits light.

The organic EL element can emit light with high luminance, low power consumption and fast response, and can operate with a low-voltage DC current. Therefore, the organic EL element is expected to be used as a light source for displays in electronic device.

However, light-emitting devices that use the organic EL element are troubled by a decrease in emission intensity after long periods of use. This decrease in emission intensity is thought to be caused by an accumulation of trapped charge on the interface of the organic emission layer. Applying voltage to the organic EL element such that the anode attains a lower potential than the cathode (i.e., applying reverse voltage) has been known to be effective against the decrease in emission intensity of the organic EL element that results from accumulated charge as mentioned above.

Japanese Laid-Open Patent Application Publication No. 3-110786 discloses an example of a light-emitting device that uses an organic EL element. The light-emitting device includes means for applying reverse voltage to the organic EL element.

For reduction in weight of device that carries liquid crystal displays and refinement of displayed images, further reduction in weight and downsizing are desired for light-emitting devices that use an organic EL element. To reduce the weight of the light-emitting device and make it more compact, the device structure must be further simplified. Therefore, the application of reverse voltage to the organic EL element should also be achieved in as simple structure as possible.

The light-emitting device described in Japanese Laid-Open Patent Application Publication No. 3-110786 needs separate power sources both for emitting light and applying reverse voltage. However, this in turn complicates the structure of the light-emitting device and increases its size. A light-emitting device that enables the application of reverse voltage with a simpler structure is desired.

### Brief Summary of the Invention

The present invention has been made in order to solve the above mentioned problems of the conventional techniques, and it is therefore an object of the present invention to provide a light-emitting device that uses an organic EL element, wherein the application of reverse voltage to the organic EL element is achieved with a simple structure.

In one aspect of the present invention, a light-emitting device includes a power source, an organic EL element, and a capacitor. When the light-emitting device is on, the power source applies forward voltage to the organic EL element and charges the capacitor. When the light-emitting device is off, the capacitor applies reverse voltage to the organic EL element, without using the power source.

In this specification, the application of voltage such that an anode of the organic EL element attains a higher potential than a cathode thereof is referred to as "the application of forward voltage", and the application of voltage such that the anode attains a lower potential than the cathode is referred to as "the application of reverse voltage".

In the light-emitting device, the organic EL element emits light based on current supplied from the power source. At that time, current is also supplied to the capacitor, and the capacitor accumulates charge.

When the light-emitting device is subsequently turned off, the capacitor with accumulated charge is used to apply reverse voltage to the organic EL element, without using the power source. Accordingly, charge accumulated on the interface of an organic emission layer of the organic EL element is transferred to the capacitor, and thus eliminated from the organic EL element. By eliminating such accumulated charge, it is possible to suppress a decrease in the emission intensity of the organic EL element.

In the light-emitting device of the present invention, reverse voltage can be applied to the organic EL element without the use of a separate power source for applying the reverse voltage to the organic EL element. Such a structure makes it possible to realize a light-emitting device that applies reverse voltage to the organic EL element with a simple structure.

It is preferred that a constant current source is used as the power source in the light-emitting device.

It is preferred that the light-emitting device further includes a first switch that switches between a first state, in which an anode of the organic electroluminescent element is connected to a first terminal of the capacitor, and a second state in which the anode of the organic electroluminescent element is connected to a second terminal of the capacitor; and a second switch that switches between a third state, in which a cathode of the organic electroluminescent element is connected to the first terminal of the capacitor, and a fourth state in which the cathode of the organic electroluminescent element is connected to the second terminal of the capacitor. When the light-emitting device is on, the first switch switches to the first state, and the second switch switches to the fourth state. On the other hand, when the light-emitting device is off, the first switch switches to the second state, and the second switch switches to the third state.

In the light-emitting device, one terminal of the capacitor (i.e. the first terminal of the capacitor) is connected to the anode of the organic EL element during light emission, and another terminal of the capacitor (i.e. the second terminal of the capacitor) is connected to the cathode of the organic EL element. Accordingly, the organic EL element and the capacitor are connected in parallel. When forward voltage is applied from the power source to the organic EL element, equivalent voltage is also applied to the capacitor.

When the light-emitting device is turned off thereafter, the anode of the organic EL element and the second terminal of the capacitor are connected, and the cathode of the organic EL element and the first terminal of the capacitor are connected. Voltage to the organic EL element that lowers the potential of the anode with respect to the cathode, i.e., reverse voltage is applied by the charge accumulated in the capacitor, without using the power source.

According to the light-emitting device structured as described above, a simple structure using only two switches can realize a parallel connection between the organic EL element and the capacitor, as well as the application of reverse voltage from the capacitor to the organic EL element. Therefore, the structure of a light-emitting device that uses an organic EL element can be simplified.

It is also preferred that the light-emitting device described above also repeatedly alternates between on and off states by pulse-driving.

If the light-emitting device is pulse-driven to repeatedly alternate between on and off states, charge accumulated during the on state can be immediately eliminated thereafter when the light-emitting device is turned off so as to suppress a considerable decrease in emission intensity. According to the above light-emitting device, a light-emitting device capable of maintaining emission intensity over long periods of use can be realized with a simple structure.

These aspects and features may be utilized singularly or, in combination, in order to make improved light-emitting device. In addition, other objects, features and advantages of the present teachings will be readily understood after reading the following detailed description together with the accompanying drawings and claims. Of course, the additional features and aspects disclosed herein also may be utilized singularly or, in combination with the above-described aspect and features.

### Brief Description of the Drawings

FIG. 1 is a schematic diagram showing the structure of a light-emitting device 12 according to a first embodiment.
FIG. 2 is a drawing showing shifts in the states of switches 20, 22 and 24 according to the first embodiment.
FIG. 3 is a schematic diagram showing the structure of a light-emitting device 32 according to a modification of the first embodiment.

### Detailed Description of the Invention

Hereinafter, an embodiment of the present invention will be explained with reference to the accompanying drawings. As an introduction, main features of the embodiment are listed below. (Feature 1) A light-emitting device includes a constant current source, an organic EL element, a capacitor, a first switch, a second switch, and a third switch, wherein
a positive terminal of the constant current source is connected to an anode of the organic EL element via the third switch,
a negative terminal of the constant current source is connected to the cathode of the organic EL element,
a first terminal of the capacitor is connected to the anode of the organic EL element via the first switch, and connected to the cathode of the organic EL element via the second switch,
a second terminal of the capacitor is connected to the anode of the organic EL element via the first switch, and connected to the cathode of the organic EL element via the second switch,
the first switch can be switched between a conductive state between the anode of the organic EL element and the first terminal of the capacitor, and a conductive state between the anode of the organic EL element and the second terminal of the capacitor,
the second switch can be switched between a conductive state between the cathode of the organic EL element and the first terminal of the capacitor, and a conductive state between the cathode of the organic EL element and the second terminal of the capacitor, and
the third switch can be switched between a conductive state and a non-conductive state.

(First Embodiment) An embodiment of the present invention will now be explained with reference to the accompanying drawings.

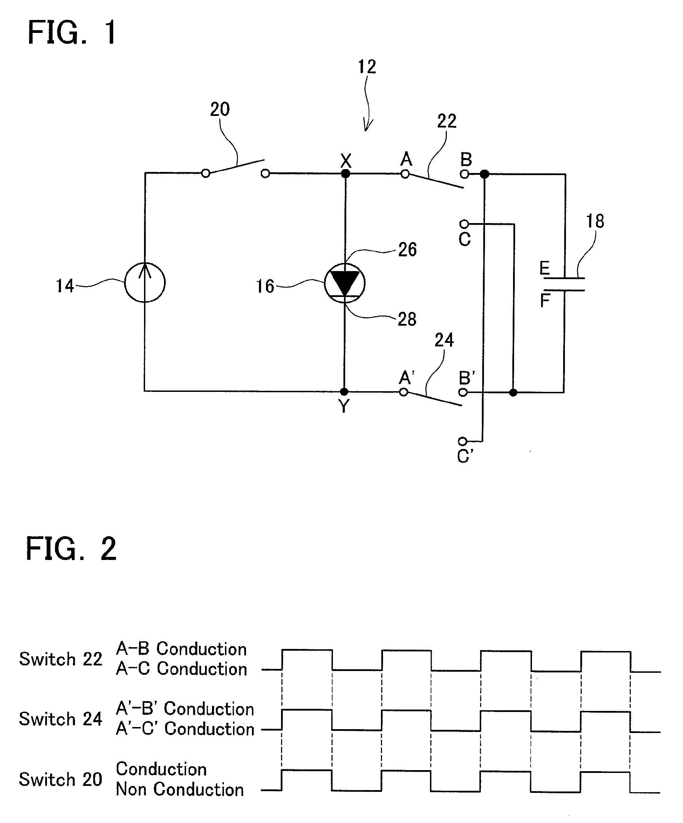

As shown in FIG. 1, a light-emitting device 12 includes a constant current source 14, an organic EL element 16, and a capacitor 18.

The organic EL element 16 includes an organic emission layer, an anode 26 and a cathode 28. The organic emission layer is disposed between the anode 26 and the cathode 28.

The organic EL element 16 may be structured, for example, by forming the anode 26, the organic emission layer, and the cathode 28 on a substrate. In the present embodiment, the organic EL element 16 is formed as a bottom emission type in which light emitted from the organic emission layer is extracted from a substrate side.

The substrate is a plate-like member for supporting the organic EL element 16, and a transparent substrate that exhibits a high transmission factor with respect to the extracted light is used as the substrate. For example, a glass substrate exhibiting a high transmission factor in a visible light region, a transparent acrylic resin or the like may be used as such a substrate.

The anode 26 is formed by a metal oxide material with electric conductivity, for example ITO (indium tin oxide), IZO (indium zinc oxide), ZnO (zinc oxide), and SnO2 (tin oxide) and the like may be used.

A luminescent material such as Alq3 can be used as the organic emission layer to achieve structures that exhibit monochromatic light that is red, green, blue, yellow or another color, and to achieve other structures that exhibit a luminous color, such as white light, through a combination of the monochromatic light structures. Conceivable structures that exhibit white light include a layered structure laminated with two or three emission layers; a compound structure that compounds different luminescent materials into one emission layer; and a divided structure in which one emission layer is divided into plural sub pixels with different color.

In addition, functional layers such as a charge (electron hole, electron) injection layer, a charge (electron hole, electron) transport layer, a block layer or the like may also be incorporated as appropriate.

As the cathode 28, for example, a reflecting electrode exhibiting reflectivity at least for visible light, which is made from a metal such as aluminum, gold, silver, copper or chromium, or an alloy thereof, may be used.

A protective portion can also be provided more outward than the cathode 28 in order to protect the organic emission layer from oxygen and water. The protective portion may be formed, for example, as a passivation film or a sealing can, or a combination thereof.

To form the anode 26, the organic emission layer, the cathode 28, and the protective portion, commonly known thin film formation methods such as vacuum vapor deposition and sputter deposition can be used as appropriate.

When forward voltage is applied to the organic EL element 16, electron holes and electrons are injected into the organic emission layer, whereby the organic EL element 16 emits light. Extensive periods of light emission, however, lead to an accumulation of charge on the interface of the organic emission layer, which decreases emission intensity. Charge accumulated on the interface of the organic layer can be eliminated by applying voltage which causes the anode 26 to attain a lower potential than the cathode 28 (i.e. reverse voltage) to the organic EL element 16.

The capacitor 18 may be a capacitor in general use, provided that it is one capable of accumulating sufficient charge to apply reverse voltage to the organic EL element 16 when the organic EL element 16 is off.

The constant current source 14 includes a positive electrode terminal and a negative electrode terminal, and supplies a constant DC current from the positive electrode terminal to the negative electrode terminal. The positive electrode terminal of the constant current source 14 is connected to the anode 26 of the organic EL element 16 via a switch 20. The switch 20 switches between a conductive state and a non-conductive state. The cathode 28 of the organic EL element 16 is connected to the negative electrode terminal of the constant current source 14. The light-emitting device 12 is turned on by switching the switch 20 to the conductive state, and turned off by switching the switch 20 to the non-conductive state.

The capacitor 18 is connected in parallel with the organic EL element 16 via first switch 22 and second switch 24. The switch 22 is a change-over switch that switches between an A-B conductive state (first state) and an A-C conductive state (second state). The switch 24 is also a change-over switch, and switches between an A'-B' conductive state (third state) and an A'-C' conductive state (forth state). The anode 26 of the organic EL element 16 is connected to a terminal A of the switch 22, and the cathode 28 of the organic EL element 16 is connected to a terminal A' of the switch 24. A terminal E on an end of the capacitor 18 is connected to a terminal B of the switch 22 and a terminal C' of the switch 24. A terminal F on another end of the capacitor 18 is connected to a terminal C of the switch 22 and a terminal B' of the switch 24.

The organic EL element 16 and the capacitor 18 are connected in parallel when the switch 22 conducts electricity between the terminals A and B, and the switch 24 conducts electricity between the terminals A' and B'. Furthermore, the organic EL element 16 and the capacitor 18 are connected in parallel with reversed polarity when the switch 22 conducts electricity between the terminals A and C, and the switch 24 conducts electricity between the terminals A' and C'.

The switches 20, 22 and 24 vary their states in synchronization with each other. FIG. 2 shows an example of shifts in the states of the switches 20, 22 and 24 over time in the light-emitting device 12 according to the present embodiment. If the switch 20 is switched to the conductive state, then the switches 22 and 24 are switched to the A-B and A'-B' conductive states, respectively. Alternatively, if the switch 20 is switched to the non-conductive state, then the switches 22 and 24 are switched to A-C and A'-C' conductive states, respectively.

Any type of method may be used for synchronizing the switches 22 and 24 with the switch 20. For example, a configuration in which the switches 22 and 24 are mechanically linked with the switch 20 so that the states of the switches 22 and 24 vary in conjunction with the state of the switch 20 may be used. Alternatively, the switches 20, 22 and 24 may be operated to switch their states respectively in constant synchronization.

Hereinafter, the operation of the light-emitting device 12 according to the first embodiment will be explained.

To make the light-emitting device 12 emit light, the switch 20 is switched to the conductive state. If the switch 20 is switched to the conductive state, then the switches 22 and 24 are also simultaneously switched to the A-B and A'-B' conductive states, respectively. Thus, current is supplied from the constant current source 14 to the organic EL element 16 and the capacitor 18. Immediately after the constant source 14 starts to supply current to the light-emitting device 12, an X-Y voltage (i.e., a voltage between points X, Y in FIG. 1) is zero since there is no accumulation of charge in the capacitor 18 yet, but the X-Y voltage starts to increase in conjunction with the accumulation of charge in the capacitor 18. The organic EL element 16 does not emit light and is supplied with almost no current until the X-Y voltage reaches an emission threshold voltage. Accordingly, current from the constant current source 14 is mainly supplied only to the capacitor 18. Once the X-Y voltage increases and exceeds the emission threshold voltage of the organic EL element 16, current is also supplied to the organic EL element 16 and light emission initiated. After the initiation of light emission, the voltage of the organic EL element 16 is held substantially constant. The voltage of the capacitor 18 is maintained to the voltage of the organic EL element 16, and therefore almost no charge is supplied to the capacitor 18. Thus, almost all of the current from the constant current source 14 is supplied to the organic EL element 16. In addition, the organic EL element 16 emits light at an emission intensity that corresponds to the strength of the current from the constant current source 14.

To end the light emission of the light-emitting device 12, the switch 20 is switched to the non-conductive state. When the switch 20 is switched to the non-conductive state, then the switches 22 and 24 synchronized therewith are also simultaneously switched to the A-C and A'-C' conductive states, respectively. Supply of current from the constant current source 14 is stopped, and the light emission of the organic EL element 16 is ended.

By switching the respective switches 22 and 24 to the A-C and A'-C' conductive states at this time, reverse voltage is applied to the organic EL element 16 due to the accumulation of charge in the capacitor 18. Accordingly, charge accumulated on the interface of the organic emission layer of the organic EL element 16 is transferred to the capacitor 18, and thus eliminated from the organic EL element 16.

To make the light-emitting device 12 emit light again thereafter, the switch 20 is switched to the conductive state and current is once again supplied from the constant current source 14 so that the organic EL element 16 emits light. The switches 22 and 24 synchronized therewith are respectively switched to the A-B and A'-B' conductive states so that charge once again accumulates in the capacitor 18.

At second and subsequent light emissions, a certain amount of charge is already accumulated in the capacitor 18. This is because the application of reverse voltage to the organic EL element 16 ensures that there is hardly any decrease in the accumulated charge in the capacitor 18. Consequently, less time is required for the accumulation of charge in the capacitor 18 in order to make the light-emitting device 12 emit light again. This in turn shortens the time from switching the switch 20 to the conductive state until the organic EL element 16 emits light.

The light-emitting device 12 according to the present embodiment is repeatedly turned on and off as explained above through pulse-driving of the switch 20 by a pulse with a frequency of 60 Hz or higher. In general, light repeatedly turned on and off at a frequency of 60 Hz or higher will appear continuously turned on to the human eye, thus the light-emitting device 12 can be used as an illumination device.

As explained above, using the capacitor 18 connected in parallel with the organic EL element 16 enables the application of reverse voltage to the organic EL element 16, without supply of electric current from a power source.

The application of reverse voltage using the capacitor as mentioned above is particularly effective for driving that uses the constant current source.

The intensity of light emitted from the organic EL element varies depending on the strength of supplied current. Therefore, driving the organic EL element by using the constant current source is conceivable to directly control the intensity of emitted light.

However, if the constant current source is used to apply reverse voltage to the organic EL element, considerable voltage is applied as reverse voltage to affect the durability of the organic EL element severely, because a impedance of the organic EL element with respect to the reverse voltage is extremely large. In order to prevent such a situation, it is necessary to separately prepare a constant voltage source for applying reverse voltage that is separate from the power source for light emission, or provide appropriate voltage regulator. The addition of a constant voltage source or voltage regulator to the light-emitting device, however, risks complicating the device structure and increasing its size.

According to the light-emitting device 12 of the present embodiment, the application of reverse voltage is achieved by the capacitor 18, in which charge accumulates while the light-emitting device 12 is turned on. Therefore, the magnitude of reverse voltage is held almost equivalent to the emission threshold voltage of the organic EL element 16. The necessity of either a constant voltage source for reverse voltage or voltage regulator is also eliminated. Consequently, the device structure can be simplified.

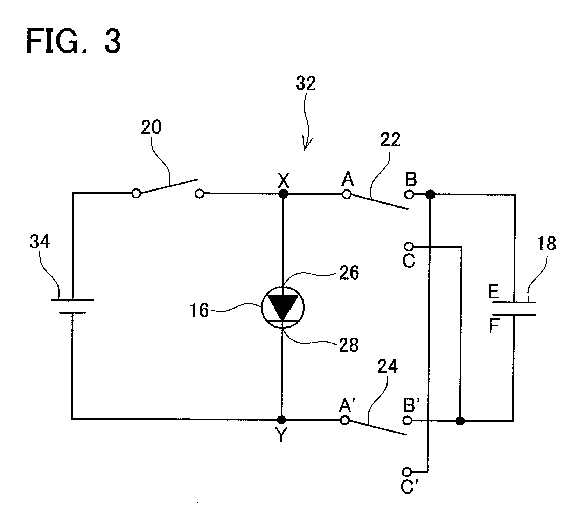

(Modification of First Embodiment) FIG. 3 shows a modification of the present embodiment.

A light-emitting device 32 shown in FIG. 3 uses a constant voltage source 34 instead of the constant current source 14 in the light-emitting device 12.

Hereinafter, the operation of the light-emitting device 32 will be explained.

To make the light-emitting device 32 emit light, the switch 20 is switched to the conductive state. If the switch 20 is switched to the conductive state, then the switches 22 and 24 are also simultaneously switched to the A-B and A'-B' conductive states, respectively. Thus, current is supplied from the constant voltage source 34 to the organic EL element 16 and the capacitor 18. Using the constant voltage source 34, an X-Y voltage exceeding the emission threshold voltage is applied so that the organic EL element 16 emits light. At the same time, the capacitor 18 also accumulates charge.

To end the light emission of the light-emitting device 32, the switch 20 is switched to the non-conductive state. When the switch 20 is switched to the non-conductive state, then the switches 22 and 24 synchronized therewith are also simultaneously switched. The supply of current from the constant voltage source 34 is stopped, and the light emission of the organic EL element 16 is ended.

By switching the respective switches 22 and 24 to the A-C and A'-C' conductive states at this time, reverse voltage is applied to the organic EL element 16 due to the accumulation of charge in the capacitor 18. Accordingly, charge accumulated on the interface of the organic emission layer of the organic EL element 16 is transferred to the capacitor 18, and thus eliminated from the organic EL element 16.

To make the light-emitting device 32 emit light again thereafter, the switch 20 is switched to the conductive state and current is once again supplied from the constant voltage source 34 so that the organic EL element 16 emits light. The switches 22 and 24 synchronized therewith are respectively switched to the A-B and A'-B' conductive states so that charge once again accumulates in the capacitor 18.

Thus in the light-emitting device 32 as well, as explained above, using the capacitor 18 connected in parallel with the organic EL element 16 enables the application of reverse voltage to the organic EL element 16, without supply of electric current from a power source.

In the light-emitting device 32, the organic EL element 16 can immediately be made to emit light once the switch 20 is switched to the conductive state, without waiting for the initial accumulation of charge in the capacitor 18. Regardless of whether the device is starting up for the first time, light emission is immediately possible for a fast response speed.

It should be noted that although the organic EL element 16 is formed as a bottom emission type here, a top emission type in which light emitted from the organic emission layer is extracted from a side opposite the substrate may be used. In this case, the substrate used may be a transparent substrate such as a glass substrate, or an opaque substrate such as a metal substrate. However, an electrode and a protective portion formed on the side from which light is extracted must be formed transparent.

The above gives a detailed description of an embodiment according to the present invention; however, this is but merely one example and does not limit the scope of the claims. Various modifications and changed forms of this specific example are also included in the scope of the art described in the claims. Further, the technical components described in this specification or in the drawings exhibit technical utility singly or in various combinations and are not limited to the combinations recited in the claims as filed. The present invention illustrated in this specification or in the drawings attain a plurality of purposes simultaneously, and attaining one of the purposes per se offers technical utility.
A light-emitting device that uses an organic electroluminescent element, wherein the application of reverse voltage is achieved with a simple structure, is disclosed. The light-emitting device may include a power source, an organic electroluminescent element, and a capacitor. When the light-emitting device is on, the power source may be used to apply forward voltage to the organic electroluminescent element and charge the capacitor. When the light-emitting device is off, the capacitor may be used to apply reverse voltage to the organic electroluminescent element, without using the power source.

## Claims

1. A light-emitting device comprising:
a power source;
an organic electroluminescent element; and
a capacitor, wherein
the power source applies forward voltage to the organic electroluminescent element and charges the capacitor when the light-emitting device is on, and
the capacitor applies reverse voltage to the organic electroluminescent element, without using the power source, when the light-emitting device is off.

2. A light-emitting device according to claim 1, wherein the power source is a constant current source.

3. A light-emitting device according to claim 1 or 2, further comprising:
a first switch connected to the organic electroluminescent element and the capacitor, the first switch switching between a first state, in which an anode of the organic electroluminescent element is connected to a first terminal of the capacitor, and a second state in which the anode of the organic electroluminescent element is connected to a second terminal of the capacitor; and
a second switch connected to the organic electroluminescent element and the capacitor, the second switch switching between a third state, in which a cathode of the organic electroluminescent element is connected to the first terminal of the capacitor, and a fourth state in which the cathode of the organic electroluminescent element is connected to the second terminal of the capacitor, wherein
when the light-emitting device is on, the first switch switches to the first state, and the second switch switches to the fourth state, and
when the light-emitting device is off, the first switch switches to the second state, and the second switch switches to the third state.

4. A light-emitting device according to claim 1, wherein the light-emitting device repeatedly alternates between on and off states by pulse-driving.
